# EUROPÄISCHE PATENTANMELDUNG

(11) **EP 0 624 864 A2**
(43) Veröffentlichungstag der Anmeldung: **17.11.1994**
(21) Anmeldenummer: 94106721.7
(22) Anmeldetag: 29.04.1994
(51) Int. Cl.: G10D 13/02, F16B 1/00, G10G 5/00, F16M 11/06

(54) **Drehgelenk mit Klemmvorrichtung**

(30) Priorität: 08.05.1993 DE 9307020 U
(71) Anmelder: SONOR JOHS. LINK GmbH, D-57319 Bad Berleburg (DE)
(72) Erfinder: Sassmannshausen, Werner, D-57319 Bad Berleburg-Aue (DE); Menzel, Karl-Heinz, D-57319 Bad Berleburg-Aue (DE)
(74) Vertreter: Müller, Gerd, Dipl.-Ing.

(57) **Zusammenfassung**

Ein Drehgelenk (4) für einen im wesentlichen stabartigen Gegenstand (3) wie ein Stativ, ein Ständerbein oder ein ähnlicher Träger bzw. Halter für Geräte, insbesondere für Percussions-Musikinstrumente, mit zwei zueinander relativ beweglichen, durch eine Klemmvorrichtung feststellbaren Gelenkteilen (7, 10) kann variabler verwendet werden, wenn die Klemmvorrichtung zur gleichzeitigen Klemmung des stabartigen Gegenstandes (3) ausgebildet ist.

## Beschreibung

Die Erfindung betrifft ein Drehgelenk für einen im wesentlichen stabartigen Gegenstand wie ein Stativ, ein Ständerbein oder ein ähnlicher Träger bzw. Halter für Geräte, insbesondere für Percussions-Musikinstrumente, mit zwei zueinander relativ beweglichen, durch eine Klemmvorrichtung feststellbaren Gelenkteilen.

Stative, Ständerbeine oder ähnliche Träger bzw. Halter, die ein Drehgelenk dieser Art besitzen, sind durch die DE 39 19 577 A1 bekanntgeworden und gelangen insbesondere in Verbindung mit Percussions-Musikinstrumenten, z.B. Idiophonen und Membranophonen, zum Einsatz. In der Regel sind Ständerbeine bspw. der großen Trommel (Bass Drum) von Schlagzeugen so zugeordnet, daß sie in der Gebrauchsstellung über den Trommelumfang vorstehen und dabei die große Trommel zusammen mit der zugehörigen Fußmaschine auf dem Boden an drei Punkten abstützen. Weiterhin ist es üblich, drei baulich übereinstimmende Ständerbeine zum Aufstellen solcher Trommeln (Stand Tom) von Schlagzeugen zu benutzen, bei denen die Längsachse des Resonatormantels im wesentlichen vertikal ausgerichtet ist, so daß das über dem Resonatormantel gespannte Schlagfell zumindest annähernd eine Horizontallage einnimmt. In diesem Fall sind die Ständerbeine annähernd gleichmäßig um den Umfang des Resonatormantels verteilt angeordnet.

Die Drehgelenke des jeweiligen Stativs, Ständerbeins oder ähnlichen Trägers bzw. Halters dienen dazu, für die verschiedenen Percussions-Musikinstrumente bessere Transportmöglichkeiten zu ermöglichen. Dies bspw. um die Ständerbeine eines Stand Toms in eine zu dem Resonatormantel parallele Lage einzuschwenken; am Einsatzort werden die Ständerbeine dann wieder in ihre Betriebsposition ausgeschwenkt. Damit sich das Percussions-Musikinstrument bei seiner Aufstellung auf den individuell ermittelten Einstellwert bringen läßt, ist das bekannte Drehgelenk zudem mit einer Anzeigevorrichtung versehen, welche sich mindestens über einen begrenzten Drehwinkelbereich um die Gelenkachse erstreckt.

Der Erfindung liegt die Aufgabe zugrunde, ein Drehgelenk der eingangs genannten Art zu verbessern und insbesondere hinsichtlich seiner Verwendung variabler zu gestalten.

Diese Aufgabe wird erfindungsgemäß dadurch gelöst, daß die Klemmvorrichtung zur gleichzeitigen Klemmung des stabartigen Gegenstandes ausgebildet ist. Auf verblüffend einfache Weise läßt sich damit erreichen, daß nach dem Aufheben der Klemmung der in dem Drehgelenk gehaltene stabartige Gegenstand sowohl verschwenk- als auch in Richtung seiner Längsachse verschiebbar ist. Um diese Doppelfunktion des Drehgelenkes zu gewährleisten, bedarf es somit keiner zweiten Klemmeinheit. Weiterhin läßt sich die Klemmung gegebenenfalls nur soweit aufheben, daß zwar ein Verschieben, nicht jedoch ein Verschwenken des stabartigen Gegenstandes möglich ist.

Nach einer vorteilhaften Ausgestaltung der Erfindung ist auf eine in einem festen Gelenkteil drehbar angeordnete Hülse ein das bewegliche Gelenkteil bildender Ring aufgeschoben, der in seiner von dem festen Gelenkteil abgewandten Ringfläche diametral angeordnete prismatische Radialausnehmungen aufweist, die mit Manteldurchbrechungen - aus Gründen der einfacheren Herstellung vorzugsweise in Form von Langlöchern - der Hülse korrespondieren. Wenn sich die Radialausnehmungen und die Manteldurchbrechungen in einer fluchtenden Lage befinden, läßt sich der stabartige Gegenstand in das Drehgelenk einschieben, wobei er sich durch die Radialausnehmungen des Ringes und die axialen Manteldurchbrechungen der Hülse erstreckt. Da die Hülse drehbar in dem festen Gelenkteil gehalten wird, läßt sich - nach dem Lösen der Klemmung - der stabartige Gegenstand ohne weiteres verschwenken, denn die Hülse und der Ring drehen sich ungehindert mit; gleichzeitig kann der stabartige Gegenstand in seiner Längsrichtung beliebig verschoben werden. Soll der stabartige Gegenstand hingegen in einer gewünschten Position festgelegt werden, braucht er lediglich in die Radialausnehmungen des Ringes eingedrückt zu werden, wobei gleichzeitig das Drehgelenk festgestellt wird.

Es empfiehlt sich, daß die Hülse an ihrem freien Ende außen mit einem Gewindeabschnitt versehen ist, auf dem gegen die Kraft eines sich an dem stabartigen Gegenstand abstützenden Druckelementes - vorzugsweise eine Druckfeder - eine Rändelmutter aufschraubbar ist. Durch einfaches Verschrauben der Rändelmutter auf dem Außengewinde der Hülse lassen sich der stabartige Gegenstand und die Gelenkteile des Drehgelenkes entweder festlegen oder lösen, in letzterem Falle durch Lösen der Rändelmutter, wodurch die Klemmung aufgehoben wird.

Wenn vorteilhaft auf der Hülse zwischen dem Ring und der Rändelmutter eine Kunststoffscheibe angeordnet ist, die an dem stabartigen Gegenstand anliegt, läßt sich darüber die beim Aufschrauben der Rändelmutter aufgebrachte Klemmkraft großflächig auf den stabartigen Gegenstand übertragen, der in die prismatischen Radialausnehmungen eingeklemmt wird.

Eine vorteilhafte Ausgestaltung der Erfindung sieht vor, daß der Ring in das feste Gelenkteil einrastbar ist, wozu sich vorzugsweise eine Kugelrastverbindung vorsehen läßt. Die Kugelrastverbindung, kann bspw. aus zwei Kugeln bestehen, die - bezogen auf die Vertikalachse - oben und unten in die dem festen Gelenkteil zugewandte Ringfläche des Ringes eingepreßt und denen in der benachbarten Ringfläche des festen Gelenkteiles entsprechende Rastausnehmungen zugeordnet sein können. Es versteht sich, daß sich die Kugeln und die Rastausnehmungen auch in dem jeweils anderen Gelenkteil anordnen lassen. Die Kugelrastverbindung sorgt in ihrer Betriebsstellung, d.h. bei eingerasteten Kugeln für eine sichere Festlegung des drehbaren Gelenkteils bzw. Rings.

Weitere Merkmale und Vorteile der Erfindung ergeben sich aus den Ansprüchen und der nachfolgenden Beschreibung, in der ein Ausführungsbeispiel des Gegenstandes der Erfindung anhand von Ständerbeinen eines Stand Toms näher erläutert ist. Es zeigen:
- Figur 1: die Vorderansicht eines erfindungsgemäßen Drehgelenkes für verschwenkbare Ständerbeine aufweisenden Stand Toms;
- Figur 2: das Stand Tom nach Fig. 1 in der Draufsicht;
- Figur 3: als Einzelheit das an einem nur teilweise dargestellten Resonatormantel des Stand Toms angeordnete, in der Klemmposition gezeigte Drehgelenk;
- Figur 4: das Drehgelenk nach Fig. 3 im Querschnitt;
- Figur 5: eine der Fig. 3 entsprechende Darstellung mit demgegenüber allerdings zum Verschwenken gelösten Drehgelenk;
- Figur 6: das Drehgelenk nach Fig. 5 im Querschnitt;
- Figur 7: als Einzelheit die Vorderansicht des als Ring ausgebildeten beweglichen Gelenkteils, von der prismatische Radialausnehmungen aufweisenden Ringfläche her gesehen; und
- Figur 8: den Ring nach Fig. 7 in der Draufsicht im Schnitt II-II.

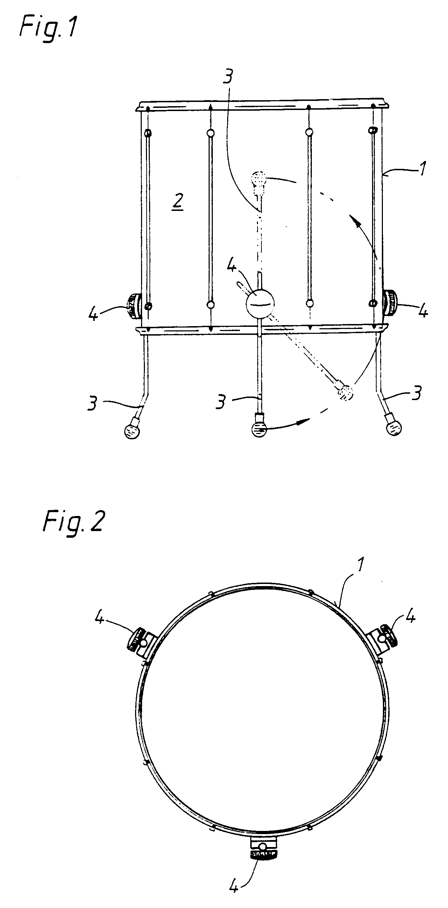

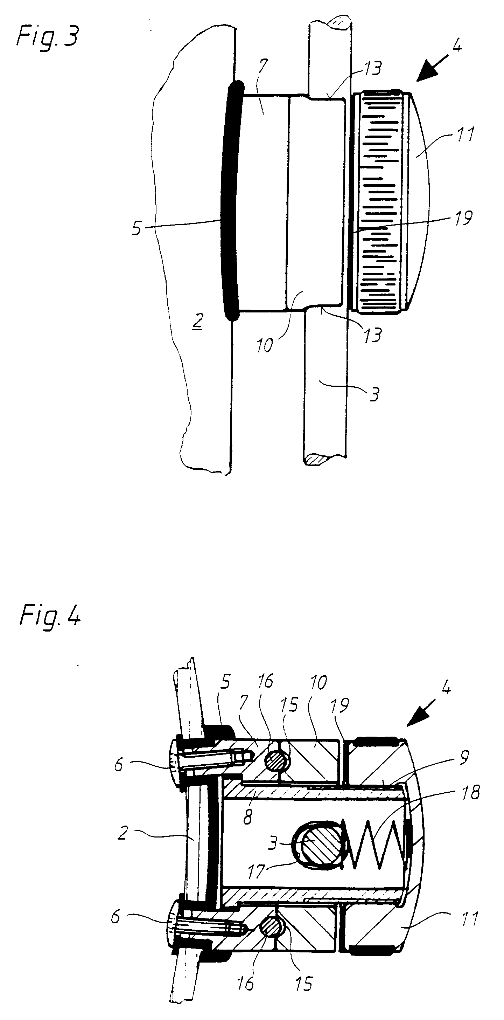

Das in den Fig. 1 und 2 gezeigte Stand Tom 1 besitzt drei annähernd gleichmäßig um den Umfang des Resonatormantels 2 verteilt angeordnete Standbeine 3, die über ein Drehgelenk 4 an dem Resonatormantel 2 befestigt sind. Die Drehgelenke 4 erlauben es, die Ständerbeine 3 zum Transport aus der Spieleinstellung des Stand Toms 1 an den Resonatormantel 2 zu verschwenken, wie in Fig. 1 für das mittlere Ständerbein gezeigt, von dem strichpunktiert auch eine Zwischenstellung und die völlig eingeschwenkte Endstellung gezeichnet sind. Am neuen Einsatzort werden die Ständerbeine 3 dann wieder in ihre Betriebsposition gemäß Fig. 1 zurückgeschwenkt.

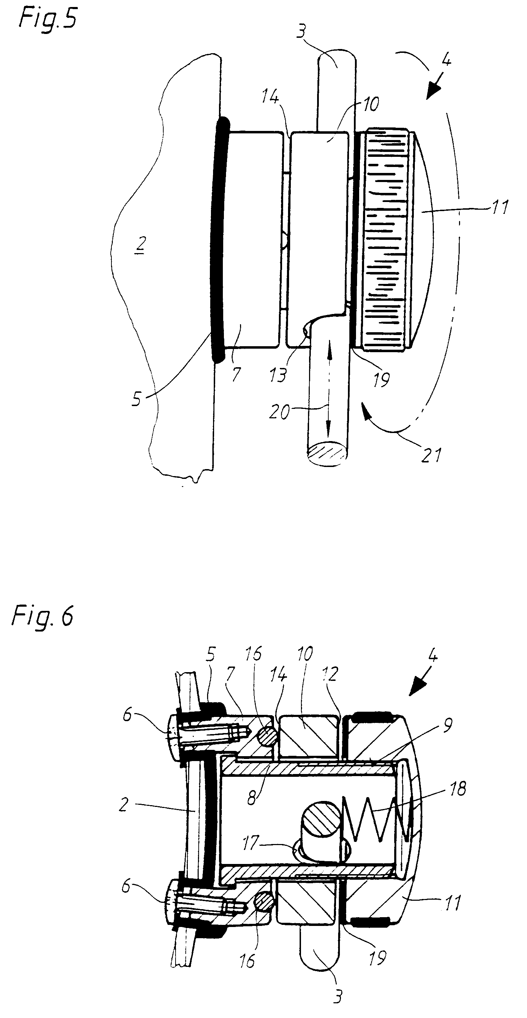

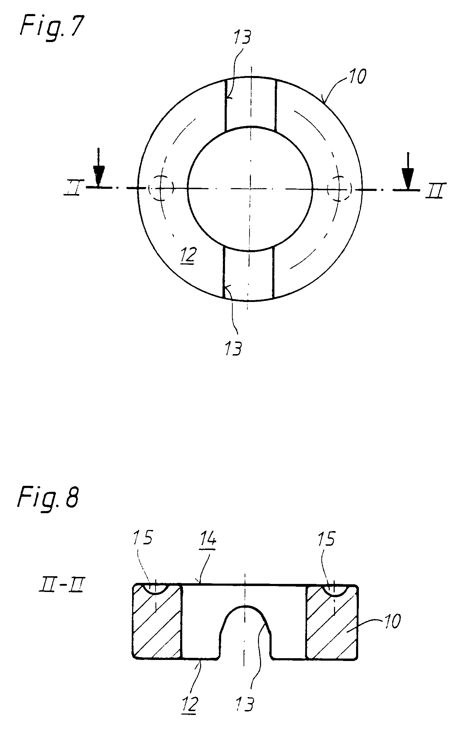

Das im einzelnen in den Fig. 3 bis 6 dargestellte Drehgelenk 4 besteht aus einem mit einem Gummilager 5 mittels Schrauben 6 (vgl. die Fig. 4 und 6) starr am Resonatormantel 2 des Schlagzeugs befestigten Gelenkteil 7, einer drehbeweglich in dem Gelenkteil 7 angeordneten Hülse 8, die an ihrem freien, vorderen Ende mit einem Außengewindeabschnitt 9 versehen ist, sowie einem auf die Hülse 8 aufgeschobenen, das bewegliche Gelenkteil des Drehgelenks 4 bildenden Ring 10 und einer auf den Außengewindeabschnitt 9 aufgeschraubten Rändelmutter 11. Der im einzelnen in den Fig. 7 und 8 gezeigte Ring 10 weist in seiner von dem festen Gelenkteil 7 abgewandten Ringfläche 12 zwei diametral angeordnete prismatische Radialausnehmungen 13 und in seiner dem Gelenkteil 7 zugewandten Ringfläche 14 zwei im wesentlichen sphärische Rastausnehmungen 15 auf. Diese korrespondieren mit zwei in die vordere Ringfläche des festen Gelenkteils 7 eingepreßten Kugeln 16 (vgl. die Fig. 4 und 6), so daß sich eine aus den Rastausnehmungen 15 und den Kugeln 16 bestehende Kugelrastverbindung des Drehgelenks 4 ergibt.

Die Hülse 8 besitzt einander fluchtend gegenüberliegende, in Form von axialen Langlöchern ausgebildete Manteldurchbrechungen 17, von denen in den Fig. 4 und 6 lediglich eine zu erkennen ist. Der auf die Hülse 8 aufgesetzte Ring 10 bildet mit seinen vorne offenen prismatischen Radialausnehmungen 13 im Zusammenspiel mit den Manteldurchbrechungen 17 eine Durchgangsöffnung für das Ständerbein 3 in dem Drehgelenk 4, wobei das Ständerbein die Hülse durch die Manteldurchbrechungen 17 hindurch durchdringt und sich in die von den prismatischen Radialausnehmungen 13 zur Verfügung stehenden Aufnahmen eindrückt. Dies dann, wenn die Rändelmutter 11 auf den Außengewindeabschnitt 9 der Hülse 8 aufgeschraubt wird. Eine in der Hülse 8 angeordnete, sich einerseits an dem Ständerbein 3 und andererseits an der Rändelmutter 11 abstützende Druckfeder 18 sorgt für die nötige Vorspannung, und über eine zwischen dem Ring 10 und der Rändelmutter 11 angeordnete Kunststoffscheibe 19, die sich an das Ständerbein 3 anlegt (vgl. Fig. 3), wird die beim Aufschrauben der Rändelmutter 11 erreichte Klemmkraft auf das Ständerbein 3 übertragen.

Die geklemmte Betriebslage des Drehgelenks 4 und damit des Ständerbeins 3 ist in den Fig. 3 und 4 gezeigt. Aus Fig. 4 ist zu erkennen, daß in der Klemmlage die Kugeln 16 des festen Gelenkteils 7 im Eingriff mit den Rastausnehmungen 15 in der ihnen zugewandten Ringfläche des Ringes 10 sind, so daß bei angezogener Rändelmutter 11 nicht nur das Drehgelenk 4, sondern auch das Ständerbein 3 unverrückbar festgelegt ist. Soll das Ständerbein 3 an den Resonatormantel 2 des Schlagwerkzeuges eingeschwenkt werden (vgl. Fig. 1) und/oder das Ständerbein 3 in dem Drehgelenk 4 verschoben werden, braucht lediglich die Rändelmutter 11 gelöst, d.h. zumindest so weit auf dem Außengewindeabschnitt 9 der Hülse 8 abgedreht zu werden wie es erforderlich ist, um den Kraftschluß zwischen der Rändelmutter 11, der Kunststoffscheibe 19 und dem Ständerbein 3 aufzuheben. Das Ständerbein 3 läßt sich dann in Pfeilrichtung 20 (vgl. Fig. 5) in seiner Längsrichtung in eine gewünschte Position verschieben. Wird die Rändelmutter 11 dann noch weiter abgedreht, schwächt sich die Spannkraft der Druckfeder 18 entsprechend zunehmend ab, und es ist dann ein leichtes, den Ring 10 durch Verschwenken des Ständerbeins 3 aus der Rastverbindung mit dem festen Gelenkteil 7 zu lösen.

Das zum Verschieben und gleichzeitigem Verschwenken des Ständerbeins 3 in Schwenkrichtung 21 (vgl. den Pfeil in Fig. 5) gelöste Gelenk ist in den Fig. 5 und 6 dargestellt. Beim Verschwenken des Ständerbeins 3 dreht sich der Ring 10 zusammen mit der in dem festen Gelenkteil 7 und der Rändelmutter 11 gehaltenen Hülse 8, wobei die Kugeln 16 auf der ihnen zugewandten Ringfläche 14 des Rings 10 laufen, bis sie in der völlig eingeschwenkten Position des Ständerbeins 3 (vgl. Fig. 1) erneut in die Rastausnehmungen 15 einrasten, was ein weiteres Verschwenken ausschließt. Die Rastverbindung (Kugeln 16 und Rastausnehmungen 15) definieren somit auch die Schwenkendlagen für das Ständerbein 3.

## Patentansprüche

1. Drehgelenk für einen im wesentlichen stabartigen Gegenstand, wie ein Stativ, ein Ständerbein oder ein ähnlicher Träger bzw. Halter für Geräte, insbesondere für Perkussions-Musikinstrumente, mit zwei zueinander relativ beweglichen, durch eine Klemmvorrichtung feststellbaren Gelenkteilen,
**dadurch gekennzeichnet,**
daß die Klemmvorrichtung zur gleichzeitigen Klemmung des stabartigen Gegenstandes (3) ausgebildet ist.

2. Drehgelenk nach Anspruch 1,
**dadurch gekennzeichnet,**
daß auf eine in einem festen Gelenkteil (7) drehbar angeordnete Hülse (8) ein das bewegliche Gelenkteil bildender Ring (10) aufgeschoben ist, der in seiner von dem festen Gelenkteil (7) abgewandten Ringfläche (12) diametral angeordnete prismatische Radialausnehmungen (13) aufweist, die mit Manteldurchbrechungen (17) der Hülse (8) korrespondieren.

3. Drehgelenk nach Anspruch 1 oder 2,
**dadurch gekennzeichnet,**
daß die Hülse (8) an ihrem freien Ende außen mit einem Gewindeabschnitt (9) versehen ist, auf den gegen die Kraft eines sich an dem stabartigen Gegenstand (3) abstützenden Druckelementes (18) eine Rändelmutter (11) aufschraubbar ist.

4. Drehgelenk nach Anspruch 3,
**gekennzeichnet durch**
eine Druckfeder (18) als Druckelement.

5. Drehgelenk nach einem oder mehreren der Ansprüche 1 bis 4,
**gekennzeichnet durch**
eine auf der Hülse (8) zwischen dem Ring (10) und der Rändelmutter (11) angeordnete Kunststoffscheibe (19).

6. Drehgelenk nach einem oder mehreren der Ansprüche 1 bis 5,
**dadurch gekennzeichnet,**
daß der Ring (10) in das feste Gelenkteil (7) einrastbar ist.

7. Drehgelenk nach Anspruch 6,
**gekennzeichnet durch**
eine Kugelrastverbindung (15; 16).
